# EUROPÄISCHE PATENTSCHRIFT

(11) **EP 1 425 516 B1**
(45) Veröffentlichungstag und Bekanntmachung des Hinweises auf die Patenterteilung: **13.07.2005**
(21) Anmeldenummer: 02798715.5
(22) Anmeldetag: 12.09.2002
(51) Int. Cl.: F16C 13/02

(54) **LAGERANORDNUNG FÜR ZYLINDER, WALZEN ODER TROMMELN**
BEARING SYSTEM FOR CYLINDERS, ROLLS OR DRUMS
SYSTEME DE PALIER POUR CYLINDRES, ROULEAUX OU TAMBOURS

(30) Priorität: 14.09.2001 DE 10145322
(43) Veröffentlichungstag der Anmeldung: 09.06.2004
(73) Patentinhaber: INA-Schaeffler KG, 91074 Herzogenaurach (DE)
(72) Erfinder: DITTENHÖFER, Thomas, 97519 Riedbach (DE); POPP, Stephan, 91448 Emskirchen (DE); ZEILINGER, Klaus-Peter, 90556 Cadolzburg (DE)
(86) Internationale Anmeldenummer: PCT/EP2002/010214
(87) Internationale Veröffentlichungsnummer: WO 2003/025406

(56) Entgegenhaltungen:
- US-A- 2 785 021
- US-A- 3 796 471
- US-A- 4 301 721
- US-A- 5 329 849
- US-A- 5 853 139
- US-A- 5 899 321

## Beschreibung

### Anwendungsgebiet der Erfindung

Die Erfindung betrifft eine Lageranordnung für gegenüberliegende Zapfen von Zylindern, Walzen oder Trommeln einer Druckmaschine nach dem Oberbegriff von Anspruch 1.

### Hintergrund der Erfindung

Derartige Lagerungen für Zylinder oder Trommeln von Druckmaschinen sind oftmals auch als Exzenterlager ausgebildet. Ein solches als Dreiringwälzlager ausgebildetes Lager geht aus der DE 41 26 545 A1 hervor. Das dort beschriebene Dreiringwälzlager besteht aus einem mit einem Zapfen eines Gummituchzylinders verbundenen inneren Lagerring des Innenlagers, der mit einer zum Zapfen konzentrisch äußeren Laufbahn versehen ist. Das Dreiringlager weist ferner in einem Lagergehäuse einen äußeren Lagerring eines äußeren Lagers auf, der mit einer zur Bohrung des Lagergehäuses konzentrischen inneren Laufbahn versehen ist. Zwischen innerem Lagerring und äußerem Lagerring ist ein die Laufbahn für das innere Lager und das äußere Lager tragender, einteiliger exzentrischer Zwischenring vorgesehen, der durch außerhalb des Lagergehäuses liegende Betätigungsmittel in Umfangsrichtung schwenkbar ist.

Zur radialen Abstützung sind zwischen dem mit dem Zapfen verbundenen inneren Lagerring und dem exzentrischen Zwischenring einerseits und zwischen dem äußeren Lagerring und dem exzentrischen Zwischenring andererseits Radiallagerreihen in Form von Zylinderrollenlagerreihen vorgesehen, wobei neben einer Zylinderrollenlagerreihe an mindestens einem axialen Ende Axiallagerreihen, z. B. Kugellagerreihen bzw. Kreuzrollenaxiallager im inneren Lager bzw. Kugellagerreihen im äußeren Lager zur getrennten Aufnahme von axialen Kräften angeordnet sind.

Derartige Exzenterlager werden in der Druckindustrie immer dann eingesetzt, wenn mehrere Druckzylinder nebeneinander mit ihren Mantelflächen sich berührend angeordnet sind. Durch die einstellbare Exzentrizität der einzelnen Lagerung lassen sich die Zylinder zueinander an- und abstellen, wobei zwischen den Zylindern eine möglichst gerade Verbindungslinie angestrebt wird. Die Verstellbewegung der einzelnen Zylinder senkrecht zur Rotationsachse ist erforderlich, wenn der Druckvorgang an- oder abgefahren wird.

Nachteilig dabei ist, dass solche Exzenterlager, vor allem bei einer großen Verstellbewegung, einen großen radialen Bauraum beanspruchen. Das Problem wird noch dadurch verschärft, wenn im Durchmesser kleine Zylinder zum Einsatz gelangen. Im Extremfall kann das dazu führen, dass das Exzenterprinzip zur Verstellbewegung der Zylinder nicht mehr anwendbar ist, da dann die Lager größer als die zu verstellenden Zylinder sein müssten.

Es ist weiter von Nachteil, dass Exzenterlager immer nur eine Verstellbewegung auf einer kurvenförmigen Bahn ausführen können. Die Verstellbewegung wird in diesem Fall dann erschwert, wenn mehrere Zylinder nebeneinander angeordnet sind. Man hat versucht das Problem dadurch zu lösen, dass das Zapfenpaar eines jeden Zylinders exzentrisch gelagert ist. Es liegt auf der Hand, dass eine solch vielfache Exzenterlagerung von Einzelbestandteilen einer Gesamtlageranordnung kompliziert, aufwendig und damit teuer ist.

In diesem Zusammenhang sind dem Fachmann zwar Lageranordnungen bekannt geworden, die eine Verstellbewegung eines Zylinders zu dessen Rotationsachse ermöglichen, mit der beanspruchten Lösung für Druckzylinder einer. Druckmaschine aber bestenfalls in einem indirekten Verhältnis stehen.

So ist in der US 5,899,321 eine Spannvorrichtung zum ausrichtenden Führen eines Förderbandes beschrieben. Dieses Förderband wird von einer Rolle ungelenkt, deren Zapfen von einem Lager aufgenommen sind, wobei das Lagergehäuse in Längsrichtung zur Einstellung der Spannung des Förderbandes verschiebbar ist. Die Verschiebung erfolgt dabei reibungsbehaftet derart, dass eine Nut und ein Führungselement zusammenwirken.

In der US 2,785,021 ist eine Walzenmühle für plastische Stoffe beschrieben, deren gelagerte Walzen mit Hilfe einer Justierschraube aufeinander zu- oder voneinander wegbewegt werden, so dass zwischen den Walzen ein gewünschter Spalt einstellbar ist. Das gleiche Prinzip geht aus der US 3,796,471 hervor, nach der eine Rolle in einem Lagergehäuse mittels Justierschrauben in Längsrichtung verschiebbar ist.

Aus der US 4,301,721 geht eine Presse hervor, deren umlaufende Rollen in irgendeiner Weise gegeneinander verschwenkbar sind. Eine Verschiebung der Rollen mittels einer wälzgelagerten Lineareinheit ist diesem Dokument nicht entnehmbar.

Schließlich ist in der US 5,853,139 ein Druckrollensystem für eine Wickelmaschine beschrieben, bei dem über eine mit Hydraulikmittel betriebene Linearführung der Auflagedruck von Rollensegmenten gegen Wickelrollen einstellbar ist. Ein Hinweis auf die Lagerung eines Zylinders mit Hilfe eines Rotativlagers ist diesem Dokument nicht entnehmbar.

### Zusammenfassung der Erfindung

Der Erfindung liegt deshalb die Aufgabe zu Grunde, die geschilderten Nachteile zu vermeiden und eine Lageranordnung für die Zapfen von Zylindern, Walzen oder Trommeln bereitzustellen, die in einfacher Weise deren Verstellbewegung senkrecht zur Rotationsachse zulässt.

Erfindungsgemäß wird diese Aufgabe nach dem kennzeichnenden Tei! von Anspruch 1 dadurch gelöst, dass ein zentrisch ausgebildetes Rotativlager von einem Lagergehäuse aufgenommen ist, das Lagergehäuse auf einer Anschlusskonstruktion über eine wälzgelagerte Linearlagereinheit gegenüber der mit der Gestellwand verbundenen Anschlusskonstruktion in Längsrichtung verschiebbar angeordnet ist und die Zapfen durch die Anschlusskonstruktion hindurchgeführt sind, wobei zur Begrenzung der Linearbewegung die Anschlußkonstruktion mit einem Langloch versehen ist.

Durch die erfindungsgemäße Kombination von Rotativ- und Linearlager für die Zapfenlagerung von Zylindern, Walzen oder Trommeln wird in einfacher Weise deren Verstellung senkrecht zu ihrer Rotationsachse ermöglicht. Die viel Bauraum beanspruchende Verwendung von exzentrisch ausgebildeten Rotativlagern ist somit entbehrlich. Dies ist insbesondere dann vorteilhaft, wenn im Durchmesser kleine Zylinder, Walzen oder Trommeln zum Einsatz kommen.

Vorteilhafte Weiterbildungen der Erfindung sind in den Unteransprüchen 2 bis 6 beschrieben.

So ist nach Anspruch 2 vorgesehen, dass die Linearlagereinheit aus einem im Querschnitt gesehen V-förmigen Vorsprung der Anschlusskonstruktion mit zwei Laufflächen und einer entsprechend ausgebildeten V-förmigen Ausnehmung des Lagergehäuses mit zu ersteren Laufflächen parallelen Laufflächen gebildet ist, zwischen denen in einem abgewinkelten Flachkäfig angeordnete Wälzkörper abrollen, wobei Vorsprung und Ausnehmung am oberen und unteren Ende von Anschlusskonstruktion und Lagergehäuse gegenüberliegend angeordnet sind.

Nach einer weiteren Ausführungsvariante gemäß Anspruch 3 soll die Linearlagereinheit aus einem im Querschnitt gesehen rechteckigen Vorsprung der Anschlusskonstruktion mit drei Laufflächen und einer entsprechend ausgebildeten Ausnehmung des Lagergehäuses mit zu ersteren Laufflächen parallelen Laufflächen gebildet sein, zwischen denen in einem Flachkäfig angeordnete Wälzkörper abrollen, wobei Vorsprung und Ausnehmung am oberen und unteren Ende von Anschlusskonstruktion und Lagergehäuse gegenüberliegend angeordnet sind.

Nach einem anderen zusätzlichen Merkmal gemäß Anspruch 4 soll das Rotativlager als ein Los- oder als ein Festlager ausgebildet sein, wobei es in weiterer Ausgestaltung der Erfindung nach Anspruch 5 ein Kugel-, Zylinderrollen-, Pendelrollen- oder ein Kegelrollenlager sein kann.

Nach Anspruch 6 ist vorgesehen, dass das Lagergehäuse mit einer Vorrichtung zu deren Verschiebung ausgestattet ist.

Die Erfindung wird an nachstehendem Ausführungsbeispiel näher beschrieben.

### Kurze Beschreibung der Zeichnungen

Es zeigen:
- Figur 1: eine Seitenansicht einer erfindungsgemäßen Lageranordnung ohne Gestellwand,
- Figur 2: einen Längsschnitt entlang der Linie II-II in Figur 1 mit Gestellwand und
- Figuren 3 und 4: eine perspektivische Darstellung der erfindungsgemäßen Lageranordnung von je einer Seite betrachtet und wiederum ohne Gestellwand.

### Ausführliche Beschreibung der Zeichnungen

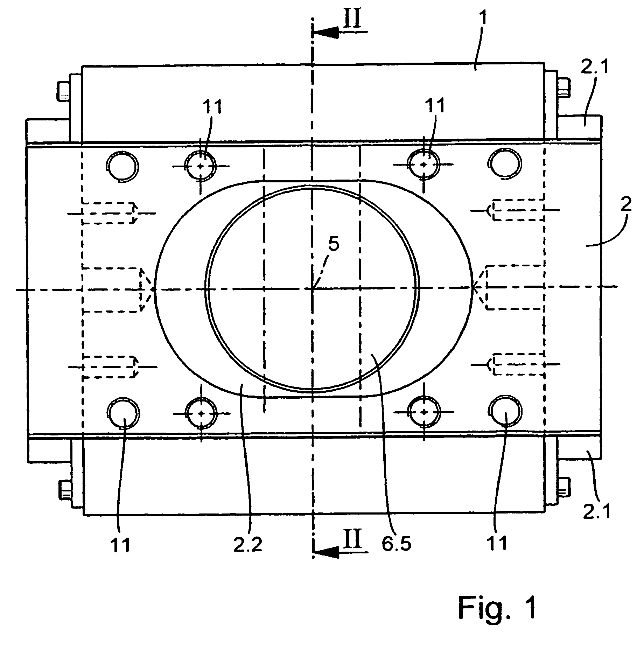

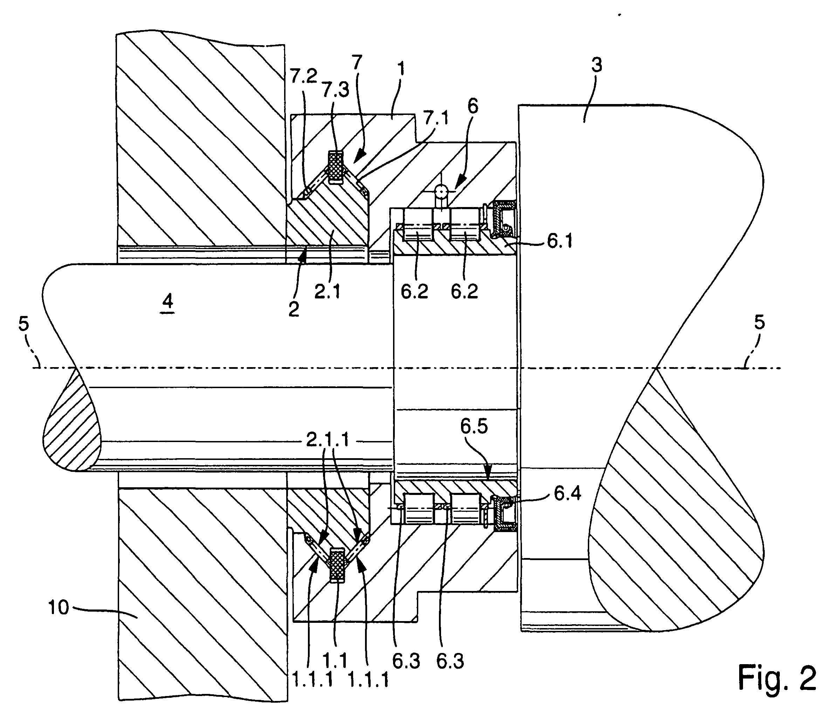

Wie die Figuren 1 bis 4 zeigen, ist der mit dem abgestuften Zapfen 4 versehene Zylinder 3 beidseitig in zwei voneinander beabstandeten Lagergehäusen 1 über je ein Rotativlager 6 gehalten, so dass er um seine Achse 5 drehbar ist, wobei die Lagergehäuse 1 mit der Gestellwand 10 verbunden sind. Das Rotativlager 6 ist als ein doppelreihiges Zylinderrollenlager ausgebildet, zu dem der Innenring 6.1 gehört, der die innere Laufbahn für die in je einem Käfig 6.3 geführten Zylinderrollen 6.2 bildet. Die äußere Laufbahn wird vom Lagergehäuse 1 selbst gebildet. Das Lager 6 ist nach außen durch die Dichtung 6.4 geschützt.

Das Lagergehäuse 1 ist an seinen gegenüberliegenden oberen und unteren Enden mit je einer V-förmigen Ausnehmung 1.1 versehen, so dass zwei schräg zueinander verlaufende prismatische Laufflächen 1.1.1 gebildet sind. Durch Variation des Winkels der Laufflächen 1.1.1 zueinander kann das Verhältnis Kippsteifigkeit zu Radialsteifigkeit je nach Anwendung optimiert werden. Die gegenüberliegenden, d. h. die oberen und die unteren Laufflächen 1.1.1 liegen in der Regel in einer gleichen Radialebene. Es ist aber auch möglich, sie axial zueinander zu versetzen. Damit wird je nach Bewegungsrichtung eine unterschiedliche Kippsteifigkeit erzielt.

Zur Lageranordnung gehört weiter die Anschlusskonstruktion 2, die an ihren gegenüberliegenden Enden je einen V-förmigen Vorsprung 2.1 besitzt, der mit der V-förmigen Ausnehmung 1.1 korrespondiert. Der V-förmige Vorsprung 2.1 bildet ebenfalls zwei schräg zueinander geneigte prismatische Laufflächen 2.1.1, so dass der Zylinder 3 mit dem Lagergehäuse 1 auf der Anschlusskonstruktion 2 über eine Linearlagereinheit 7 senkrecht zu seiner Rotationsachse 5 verfahrbar ist. Zur Befestigung von Anschlusskonstruktion 2 an der Gestellwand 10 ist erstgenannte mit mehreren Bohrungen 11 versehen.

Die Linearlagereinheit 7 besteht aus den beiden Wälzkörperreihen 7.1, die im abgewinkelten Käfig 7.2 geführt sind. Die Wälzkörperreihen 7.1 wälzen auf den Laufbahnen 1.1.1 und 2.1.1 von Lagergehäuse 1 und Anschlusskonstruktion 2 ab. Zum Linearlager gehört weiter das Zahnrad 7.3, das in eine Zahnstange von Lagergehäuse 1 und Anschlusskonstruktion 2 eingreift, so dass der Käfig 7.2 zwangsgeführt ist. Wie die Figuren weiter erkennen lassen, weist das Rotativlager 6 die Aufnahmebohrung 6.5 für den Zapfen 4 des Zylinders 3 auf, die im Durchmesser kleiner als die Langlochbohrung 2.2 der Anschlusskonstruktion 2 ist. Durch die unterschiedliche Gestaltung von Aufnahmebohrung 6.5 und Langlochbohrung 2.2 ist sichergestellt, dass der Verschiebeweg der beiden rechts- und linksseitig angeordneten Lagergehäuse 1 auf den Anschlusskonstruktionen 2 begrenzt ist, d. h., der Zylinder 3 kann soweit verfahren werden, bis sein Zapfen 4 rechts- oder linksseitig am Langloch 2.2 anschlägt.

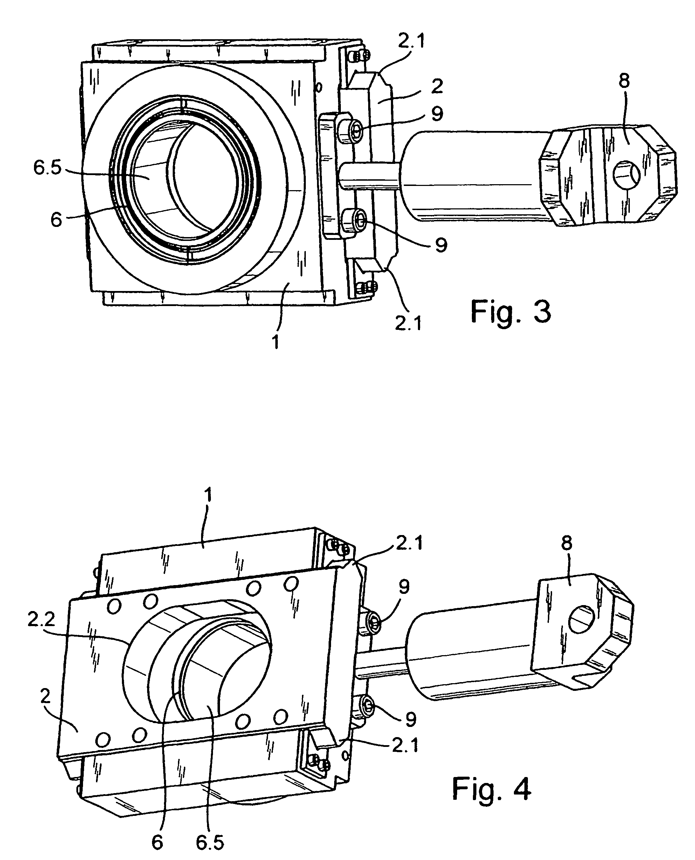

In den Figuren 3 und 4 ist eine komplette Lageranordnung für die Lagerung eines Zylinders gezeigt, wobei die Anordnung in Figur 3 von Seiten des Rotativlagers 6 und in Figur 4 von Seiten der Aufnahmekonstruktion 2 gezeigt ist. Um die gewünschte Verstellbewegung von Zylinder 3 auf der Anschlusskonstruktion 2 zu ermöglichen, sind die beiden voneinander beabstandeten Lagergehäuse 1 mit je einer Vorrichtung 8 zu deren Verschiebung versehen, die über Befestigungsschrauben 9 mit dem Lagergehäuse 1 verbunden ist. Diese Vornchtung kann beispielsweise als eine Zug- oder Druckstange ausgebildet sein, die auf pneumatischem, elektrischem oder hydraulischem Weg bewegt wird.

### Bezugszeichen

- 1: Lagergehäuse
- 1.1: V-förmige Ausnehmung
- 1.1.1: Lauffläche
- 2: Anschlusskonstruktion
- 2.1: V-förmiger Vorsprung
- 2.1.1: Lauffläche
- 2.2: Langloch
- 3: Zylinder
- 4: Zapfen
- 5: Rotationsachse
- 6: Rotativlager
- 6.1: Innenring
- 6.2: Zylinderrolle
- 6.3: Käfig
- 6.4: Dichtung
- 6.5: Aufnahmebohrung
- 7: Linearlagereinheit
- 7.1: Wälzkörper
- 7.2: Käfig
- 7.3: Zahnrad
- 8: Vorrichtung
- 9: Befestigungsschraube
- 10: Gestellwand
- 11: Bohrung

## Patentansprüche

1. Lageranordnung für gegenüberliegende Zapfen (4) von Zylindern (3), Walzen oder Trommeln einer Druckmaschine mit Betätigungsmitteln, die eine Verstellbewegung der Zylinder (3) , Walzen oder Trommeln senkrecht zu deren Rotationsachse (5) ermöglichen, wobei diese mit wenigstens einem weiteren in der Druckmaschine befindlichen Zylinder zusammenwirken und wobei die Zapfen (4) beidseitig über ein Rotativlager (6) von einer Gestellwand (10) an- und abstellbar aufgenommen sind, **dadurch gekennzeichnet, dass** das Rotativlager (6) zentrisch ausgebildet und von einem Lagergehäuse (1) aufgenommen ist, das Lagergehäuse (1) auf einer Anschlusskonstruktion (2) über eine wälzgelagerte Linearlagereineinheit (7) gegenüber der mit der Gestellwand verbundenen Anschlusskonstruktion (2) in Längsrichtung verschiebbar angeordnet ist und die Zapfen (4) durch die Anschlusskonstruktion (2) hindurchgeführt sind, wobei zur Begrenzung der Linearbewegung die Anschlusskonstruktion (2) mit einem Langloch (2.2) versehen ist.

2. Lageranordnung nach Anspruch 1, **dadurch gekennzeichnet, dass** die Linearlagereinheit (7) aus einem im Querschnitt gesehen V-förmigen Vorsprung (2.1) der Anschlusskonstruktion (2) mit zwei Laufflächen (2.1.1) und einer entsprechend ausgebildeten V-förmigen Ausnehmung (1.1) des Lagergehäuses (1) mit zu ersteren Laufflächen (2.1.1) parallelen Laufflächen (1.1.1) gebildet ist, zwischen denen in einem abgewinkelten Flachkäfig (7.2) angeordnete Wälzkörper (7.1) abrollen, wobei Vorsprung (2.1) und Ausnehmung (1.1) am oberen und unteren Ende von Anschlusskonstruktion (2) und Lagergehäuse (1) gegenüberliegend angeordnet sind.

3. Lageranordnung nach Anspruch 1, **dadurch gekennzeichnet, dass** die Linearlagereinheit (7) aus einem im Querschnitt gesehen rechteckigen Vorsprung der Anschlusskonstruktion (2) mit drei Laufflächen und einer entsprechend ausgebildeten Ausnehmung des Lagergehäuses (1) mit zu ersteren Laufflächen parallelen Laufflächen gebildet ist, zwischen denen in einem Flachkäfig angeordnete Wälzkörper abrollen, wobei Vorsprung und Ausnehmung am oberen und unteren Ende von Anschlusskonstruktion (2) und Lagergehäuse (1) gegenüberliegend angeordnet sind.

4. Lageranordnung nach Anspruch 1, **dadurch gekennzeichnet, dass** das Rotativlager (6) als ein Los- oder als ein Festlager ausgebildet ist.

5. Lageranordnung nach Anspruch 1, **dadurch gekennzeichnet, dass** das Rotativlager (6) als Kugel-, Zylinderrollen-, Pendelrollen- oder als Kegelrollenlager ausgebildet ist.

6. Lageranordnung nach Anspruch 1, **dadurch gekennzeichnet, dass** das Lagergehäuse (1) mit einer Vorrichtung (8) zu deren Verschiebung versehen ist.

## Claims

1. Bearing arrangement for journals (4), lying opposite one another, of cylinders (3), rolls or drums of a printing press, having actuating means which make an adjusting movement of the cylinders (3), rolls or drums possible perpendicularly with respect to their rotational axis (5), the said cylinders, rolls or drums interacting with at least one further cylinder situated in the printing press, and the journals (4) being held on both sides by a frame wall (10) via a rotary bearing (6) such that they can be thrown on and off, **characterized in that** the rotary bearing (6) is configured to be centred and is held by a bearing housing (1), the bearing housing (1) is arranged on a connecting construction (2), such that it can be displaced in the longitudinal direction relative to the connecting construction (2) which is connected to the frame wall, via a linear bearing unit (7) mounted on roller bearings, and the journals (4) are guided through the connecting construction (2), the connecting construction (2) being provided with a slot (2.2) in order to restrict the linear movement.

2. Bearing arrangement according to Claim 1, **characterized in that** the linear bearing unit (7) is formed from a projection (2.1) of the connecting construction (2), which has a V-shaped cross section and two running faces (2.1.1), and a correspondingly configured V-shaped recess (1.1) of the bearing housing (1), which has running faces (1.1.1) which are parallel to the former running faces (2.1.1), between which rolling bodies (7.1) roll which are arranged in an angledaway flat cage (7.2), the projection (2.1) and the recess (1.1) being arranged so as to lie opposite one another at the upper and lower end of the connecting construction (2) and the bearing housing (1).

3. Bearing arrangement according to Claim 1, **characterized in that** the linear bearing unit (7) is formed from a projection of the connecting construction (2), which has a rectangular cross section and three running faces, and a correspondingly configured recess of the bearing housing (1), which has running faces which are parallel to the former running faces, between which rolling bodies roll which are arranged in a flat cage, the projection and the recess being arranged so as to lie opposite one another at the upper and lower end of the connecting construction (2) and the bearing housing (1).

4. Bearing arrangement according to Claim 1, **characterized in that** the rotary bearing (6) is configured as a floating bearing or as a locating bearing.

5. Bearing arrangement according to Claim 1, **characterized in that** the rotary bearing (6) is configured as a ball bearing, cylindrical roller bearing, self-aligning roller bearing or as a tapered roller bearing.

6. Bearing arrangement according to Claim 1, **characterized in that** the bearing housing (1) is provided with an apparatus (8) for displacing it.

## Revendications

1. Système de palier pour des tourillons opposés (4) de cylindres (3), rouleaux ou tambours d'une machine d'impression ayant des moyens d'actionnement, qui permettent un déplacement de réglage des cylindres (3), rouleaux ou tambours perpendiculairement à leur axe de rotation (5), ceux-ci coopérant avec au moins un autre cylindre se trouvant dans la machine d'impression et les tourillons (4) étant reçus par une paroi de bâti (10) de manière à pouvoir venir en appui et être enlevés des deux côtés par le biais d'un palier rotatif (6), **caractérisé en ce que** le palier rotatif (6) est réalisé centralement et est reçu par un logement de palier (1), le logement de palier (1) est disposé de manière à pouvoir se déplacer dans la direction longitudinale sur une construction de raccordement (2) par le biais d'une unité de palier linéaire (7) montée sur rouleaux par rapport à la construction de raccordement (2) associée à la paroi du bâti et les tourillons (4) sont guidés à travers la construction de raccordement (2), la construction de raccordement (2) étant pourvue d'un trou oblong (2.2) pour limiter le mouvement linéaire.

2. Système de palier selon la revendication 1, **caractérisé en ce que** l'unité de palier linéaire (7) se compose d'une saillie en forme de V (2.1) vue en section transversale, de la construction de raccordement (2) avec deux surfaces de roulement (2.1.1) et un évidement (1.1) en forme de V de réalisation correspondante du logement de palier (1) avec des surfaces de roulement (1.1.1) parallèles aux premières surfaces de roulement (2.1.1), entre lesquelles roulent des corps de roulement (7.1) disposés dans une cage plate coudée (7.2), la saillie (2.1) et l'évidement (1.1) étant disposés en regard l'un de l'autre aux extrémités supérieure et inférieure de la construction de raccordement (2) et du logement de palier (1).

3. Système de palier selon la revendication 1, **caractérisé en ce que** l'unité de palier linéaire (7) se compose d'une saillie rectangulaire vue en section transversale, de la construction de raccordement (2) avec trois surfaces de roulement et un évidement de réalisation correspondante du logement de palier (1) avec des surfaces de roulement parallèles aux premières surfaces de roulement, entre lesquelles roulent des corps de roulement disposés dans une cage plate, la saillie et l'évidement étant disposés en regard l'un de l'autre aux extrémités supérieure et inférieure de la construction de raccordement (2) et du logement de palier (1).

4. Système de palier selon la revendication 1, **caractérisé en ce que** le palier rotatif (6) est réalisé sous forme d'un palier libre ou d'un palier fixe.

5. Système de palier selon la revendication 1, **caractérisé en ce que** le palier rotatif (6) est réalisé sous la forme d'un roulement à billes, d'un palier à roulement à rouleaux cylindriques, sphérique à rouleaux, ou à rouleaux coniques.

6. Système de palier selon la revendication 1, **caractérisé en ce que** le logement de palier (1) est pourvu d'un dispositif (8) en vue de son déplacement.
